(19) Europäisches Patentamt / European Patent Office / Office européen des brevets

(11) EP 4 530 928 A1

(12) EUROPEAN PATENT APPLICATION
published in accordance with Art. 153(4) EPC

(43) Date of publication:
**02.04.2025 Bulletin 2025/14**

(21) Application number: **23892747.9**

(22) Date of filing: **11.08.2023**

(51) International Patent Classification (IPC):
***G06N 3/063*** *(2023.01)* ***G06F 9/38*** *(2018.01)*

(52) Cooperative Patent Classification (CPC):
**G06F 9/3885; G06F 9/3836**

(86) International application number:
**PCT/CN2023/112685**

(87) International publication number:
**WO 2025/035298 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **VeriSilicon Microelectronics (Chengdu) Co., Ltd.
Chengdu, Sichuan 610041 (CN)**
- **VeriSilicon Microelectronics (Shanghai) Co., Ltd.
Shanghai 201203 (CN)**
- **VeriSilicon Microelectronics (Nanjing) Co., Ltd.
Nanjing, Jiangsu 211500 (CN)**
- **VeriSilicon Technology (Shanghai) Co., Ltd.
Shanghai 201306 (CN)**
- **Verisilicon Microelectronics (Hainan) Co., Ltd.
Haikou, Hainan 570208 (CN)**

(72) Inventors:
- **FAN, Xudong
Chengdu
Sichuan 610041 (CN)**
- **LO, Mankit
Chengdu
Sichuan 610041 (CN)**
- **JIN, Yunyi
Chengdu
Sichuan 610041 (CN)**
- **ZHANG, Yixiang
Chengdu
Sichuan 610041 (CN)**
- **XIANG, Boqiang
Chengdu
Sichuan 610041 (CN)**
- **FAN, Peng
Chengdu
Sichuan 610041 (CN)**
- **ZHANG, Weiming
Chengdu
Sichuan 610041 (CN)**
- **WU, Xuesong
Chengdu
Sichuan 610041 (CN)**
- **YOU, Qingyan
Chengdu
Sichuan 610041 (CN)**
- **ZHU, Jiayi
Chengdu
Sichuan 610041 (CN)**

(74) Representative: **Locas, Davide et al
Cantaluppi & Partners S.r.l.
Piazzetta Cappellato Pedrocchi, 18
35122 Padova (IT)**

Remarks:
A request for correction of the description has been filed pursuant to Rule 139 EPC. A decision on the request will be taken during the proceedings before the examining division (Guidelines for Examination in the EPO, A-V, 3).

# (54) STREAM PROCESSOR, OPERATION METHOD, CHIP, AND ELECTRONIC DEVICE

(57) The present disclosure provides a stream processor, computing method, chip and electronic device, and relates to the technical field of electronic circuits. Stream processor includes: at least two types of computing units, and a main control unit, wherein each type of the computing units is configured to perform one computing operation of multiplication operation, addition operation, lookup table operation, and data transportation, and the main control unit is connected to each computing unit, and configured to assign an operation instruction to the computing unit, so as to make the computing unit perform a corresponding computing operation of the computing



EP 4 530 928 A1

unit in response to the operation instruction. Through different computing units cooperating with each other, the different computing logic can be realized, and then a plurality of different computing tasks can be processed. At the same time, since each of the computing units is directly controlled by the main control unit, the flow of distributing the operation instruction can be reduced, thus simplifying the structure of the stream processor, and reducing the occupied area of the stream processor.

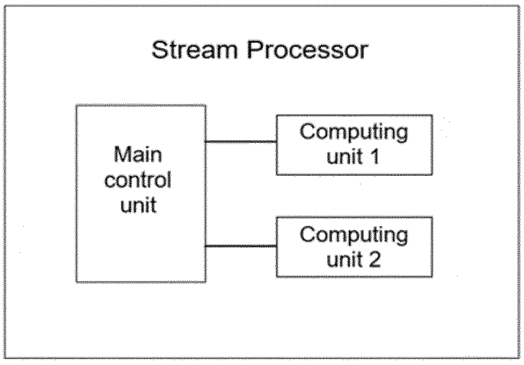


FIG. 1

# Description

## Technical Field

The present disclosure relates to the technical field of electronic circuit, and specifically, relates to a stream processor, a computing method, a chip and an electronic device.

## Background Art

Since different network models have different computing tasks, it is difficult to utilize one computing module to process a plurality of computing tasks. For example, a softmax (the normalization exponential function) computing task is quite different from a convolution computing task or a matrix multiplication computing task, which makes computing softmax directly by using a convolution module or a matrix multiplication module difficult.

Currently, it is common to dispose a specialized computing module for each network model, or to utilize a GPGPU (General-Purpose Graphics Processing Unit) to compute, which has a stronger general-purpose computing power. However, the specialized computing modules are designed only for a certain network, and often cannot compute other kinds of networks, which makes the specialized computing module less flexible, and when the plurality network models need to be supported, the computing modules corresponding to each network model need to be merged and optimized, leading to a significant increase in area. While the GPGPU has extraordinary general-purpose computing power, but requires a larger area.

## Summary

The present disclosure provides a stream processor, a computing method, a chip, and an electronic device to solve the problems that the existing specialized computing module has low general performance and the GPGPU needs to occupy a large area.

In a first aspect, the present disclosure provides a stream processor, including: at least two types of computing units, and a main control unit, wherein each type of the computing units is configured to perform one computing operation of multiplication operation, addition operation, lookup table operation, and data transportation; and the main control unit is connected to each of the computing units and configured to assign an operation instruction to the computing units, so as to make the computing units perform a corresponding computing operation of the computing units in response to the operation instruction.

In the embodiments of the present disclosure, the different computing logic can be realized through different computing units cooperating with each other, and then a plurality of different computing tasks can be processed. Therefore, the embodiments of the present disclosure can support the computing tasks of different network models through one stream processor, which has higher general performance compared with the specialized computing module. At the same time, since one stream processor can support computing tasks of different network models, it is not necessary to additionally dispose a plurality of stream processors, which reduces the occupied area compared to the GPGPU.

Since each computing unit is directly controlled by the main control unit in the stream processor, the instruction is allocated directly to a computing unit that performs a certain specific operation through the main control unit, thereby reducing a process of distributing operation instruction compared to the GPGPU. Therefore, the hardware unit of distributing operation instruction in the GPGPU does not need to be disposed, which reduces the occupied area compared to the GPGPU.

In combination with the technical solution provided in the first aspect foregoing, in some possible embodiments, the number of computing units of at least partial types of the at least two types of computing units is multiple; and the instruction receiving ends of the plurality of the same type of computing units are connected to each other, and connected to the main control unit.

In the embodiments of the present disclosure, the instruction receiving ends of a plurality of the same type of computing units are connected to each other, and connected to the main control unit, which makes the plurality of the same type of the computing units can perform the same computing operation synchronously, so that the multiple groups of data can be processed synchronously through the plurality of the same type of computing units, thereby improving the data processing efficiency. Moreover, the main control unit only needs to send the operation instruction once, and a plurality of the same type of computing units can be controlled to process the multiple groups of data synchronously. The operation instruction does not need to be distributed more than once, which reduces the number of times of distributing instruction and improves data processing efficiency.

In combination with the technical solution provided in the first aspect foregoing, in some possible embodiments, the stream processor further includes: at least one data storage area, wherein the plurality of the same type of the computing units are connected to the different data storage areas respectively.

In the embodiments of the present disclosure, since the plurality of the same type of the computing units are connected to the different data storage areas respectively, the plurality of the same type of the computing units will not repeatedly obtain data from the same data storage area, that is, will not repeatedly obtain the same group of data, thereby reducing the probability of the same group of data being repeatedly processed more than once, and reducing wasting of the computing resource.

In combination with the technical solution provided in the first aspect foregoing, in some possible embodiments, the stream processor further includes: a statistic operation unit, wherein the statistic operation unit is connected to the main control unit, and connected to each of the data storage areas; and the statistic operation unit is configured to perform a process of seeking the maximum value or a summation process on target data in the data storage areas, in response to the operation instruction assigned by the main control unit.

In the embodiment of the present disclosure, since the statistic operation unit is connected to each of the data storage areas, the statistic operation unit can obtain the target data from each of the data storage areas, and thus can perform the process of seeking the maximum value or the summation process on the target data. In this way, through disposing the statistic operation unit, it is not necessary to perform summation multiple times by using the second type of computing unit that performs the addition operation, or to additionally dispose a comparator to seek the maximum value, thereby improving the efficiency of data processing.

In combination with the technical solution provided in the first aspect foregoing, in some possible embodiments, the number of different types of computing units is the same.

In embodiments of the present disclosure, since the number of different types of the computing units is the same, each data storage area is connected to each type of computing units, so that all computing units that connected to each data storage area can process the same computing task, and then can synchronous process the multiple groups of data through all computing units that are connected to each of the data storage areas. Moreover, the processing logic performed by the computing unit corresponding to each data memory is the same, which can improve the processing efficiency for the multiple groups of data that need to perform the same computing logic.

In combination with the technical solution provided in the first aspect foregoing, in the some possible embodiments, the at least two types of computing units include a first type of computing unit, a second type of computing unit, a third type of computing unit, and a fourth type of computing unit, wherein the first type of computing unit is a computing unit that performs multiplication operation, the second type of computing unit is a computing unit that performs addition operation, the third type of computing unit is a computing unit that performs lookup table operation, and the fourth type of computing unit is a computing unit that performs transportation operation.

In the embodiments of the present disclosure, through the cooperation of the first type of computing unit, the second type of computing unit, the third type of computing unit and the fourth type of computing unit, the processing logic of a larger number of computing tasks can be realized, which thus can increase the application scenarios of the present solution.

In combination with the technical solution provided in the first aspect foregoing, in the some possible embodiments, the stream processor further includes: a table storage unit, configured to store a functional relation table, wherein the table storage unit is connected to each of the third type of computing unit, and the third type of computing unit is configured to perform the lookup table operation on the functional relation table in the table storage unit in response to the operation instruction assigned by the main control unit.

In the embodiments of the present disclosure, the functional relation table is stored through the table storage unit, which thereby makes the third type of computing unit can perform lookup table operation on the functional relation table in the table storage unit, which can reduce the computing amount of complex function and improve the data processing efficiency of the present solution.

In combination with the technical solution provided in the first aspect foregoing, in some possible embodiments, the stream processor further includes: instruction storage unit, wherein the instruction storage unit is connected to the main control unit, and the instruction storage unit is configured to store operation instruction; and the main control unit is further configured to obtain the operation instruction from the instruction storage unit.

In the embodiment of the present disclosure, the instruction storage unit is provided to store the operation instruction, so it does not need to obtain the operation instruction from the outside, which makes the present solution can be operated independently, and improves the application scope of the present solution.

In a second aspect, the present disclosure provides a computing method, applied to a stream processor described in the first aspect foregoing, and/or in combination with any of the embodiments of the first aspect foregoing, wherein the computing method includes:

assigning the operation instruction to the computing units through the main control unit;
and performing the corresponding computing operation of the computing units through the computing units in response to the operation instruction.

In a third aspect, the present disclosure provides a chip, including a stream processor as described in the first aspect foregoing, and/or in combination with any of the embodiments of the first aspect foregoing.

In a fourth aspect, the present disclosure provides an electronic device, including the chip described in the third aspect foregoing.

## Brief Description of Drawings

In order to more clearly illustrate the technical solutions of the embodiments of the present disclosure, the following will briefly introduce the drawings to be used in the embodiments, and it should be understood that the following drawings only show certain embodiments of the present disclosure, and therefore should not be regarded as a limitation of the scope, and persons of ordinary skill in the art can obtain other relevant drawings according to these drawings without inventive efforts.

FIG. 1 is a block diagram of a structure of a stream processor illustrated in the embodiments of the present disclosure;
FIG. 2 is a block diagram of a structure of an adder illustrated in the embodiments of the present disclosure;
FIG. 3 is a block diagram of a structure of a stream processor illustrated in the embodiments of the present disclosure;
FIG. 4 is a block diagram of a structure of a stream processor illustrated in the embodiments of the present disclosure;
FIG. 5 is a block diagram of a structure of a stream processor illustrated in the embodiments of the present disclosure;
FIG. 6 is a block diagram of a structure of a stream processor illustrated in the embodiments of the present disclosure;
FIG. 7 is a block diagram of a structure of a stream processor illustrated in the embodiments of the present disclosure;
FIG. 8 is a block diagram of a structure of a stream processor illustrated in the embodiments of the present disclosure;
FIG. 9 is a block diagram of a structure of a stream processor illustrated in the embodiments of the present disclosure;
FIG. 10 is a block diagram of a structure of a stream processor illustrated in the embodiments of the present disclosure; and
FIG. 11 is a flow diagram of the computing method illustrated in the embodiments of the present disclosure.

## Detailed Description of Embodiments

The terms "first", "second", "third", etc., are used only to distinguish descriptions and do not represent sequence numbers, nor can be understood as indicating or implying relative importance.

The technical solutions of the present disclosure will be described in detail below in conjunction with the drawings.

Referring to FIG. 1, FIG. 1 is the block diagram of a structure of the stream processor illustrated in the embodiments of the present disclosure, the stream processor includes at least two types of computing units and the main control unit, and the main control unit is connected to each of the computing units,
wherein each type of computing units of the at least two types of computing units is configured to perform one computing operation of the multiplication operation, addition operation, lookup table operation and data transportation.

Optionally, the at least two types of computing units described foregoing may include at least two types of computing units from the first type of computing unit, the second type of computing unit, the third type of computing unit and the fourth type of computing unit,

The first type of computing unit is the computing unit for performing the multiplication operation, for example, the first type of computing unit may be the computing unit used to perform the multiplication operation such as a multiplier, etc.

The second type of computing unit is the computing unit for performing the addition operation, for example, the second type of computing unit may be the computing unit used to perform the addition operation such as an adder, etc.

It should be noted that for a subtraction operation in the conventional sense, the essence is the addition operation performed after negating one of the numbers, i.e., the subtraction operation is essentially an addition operation, which can be realized by the second type of computing unit. For example, 3-1 can be thought of as an addition between 3 and -1. Therefore, the subtraction operation can be realized by using the second type of computing unit, through disposing a corresponding negation circuit in the second type of computing unit. Exemplarily, as shown in FIG. 2, one of inputs of the adder (In_1 shown in FIG. 2) can be connected through a multiplexer, wherein one of the inputs of the multiplexer is the original data, and the another input is the negation circuit, and the input of the negation circuit is the original data. In this way, the negation circuit can be conducted selectively when performing the subtraction, but the original data can be inputted when performing the addition.

The third type of computing unit is the computing unit that performs the lookup table operation, wherein the lookup table operation is to look up a dependent variable corresponding to the independent variable from a preset functional relation table according to the input independent variable. For example, if the corresponding relationship between A and B is recorded in the functional relation table, the third type of computing unit can look up B in the preset functional relation table according to A.

The fourth type of computing unit is the computing unit that performs a transportation operation, wherein the transportation operation is an operation that moves a storage position of data in the data storage area, for example, the operation of moving data A from a first position in the storage area to a second position for storage.

The main control unit is configured to assign the operation instruction to the computing unit, thereby making the computing unit perform the corresponding computing operation of the computing unit in response to the operation instruction.

The main control unit may be any circuit that can realize the assignment of the operation instruction to the computing unit, and the specific circuit structure of the main control unit is not limited herein.

The different computing units perform the computing operation corresponding to the computing units themselves. For example, the first type of computing unit performs the multiplication operation, the second type of computing unit performs the addition operation, the third type of computing unit performs the lookup table operation, and the fourth type of computing unit performs the transportation operation.

The connecting manners between the at least two types of computing units and the main control unit may include, but are not limited to the following several embodiments.

In the first embodiment, each computing unit is separately connected to the main control unit, for easier understanding, referring to FIG. 3.

Each operation instruction sent by the main control unit controls only one computing unit to perform the corresponding computing operation of the computing unit.

In this way, the main control unit can independently control each computing unit to perform or not, which thus can control the computing units more freely, thereby avoiding the condition of the computing unit performing a meaningless operation, and improving the resource utilization ratio in the stream processor.

In the second embodiment, the number of computing units of at least some types of the at least two types of computing units is multiple, and the instruction receiving ends of a plurality of the same type of the computing units are connected to each other, and connected to the main control unit. Since the instruction receiving ends of the plurality of the same type of the computing units are connected to each other, and connected to the main control unit, the plurality of the same type of the computing units can perform the same computing operation synchronously, so that multiple groups of data can be processed synchronously through the plurality of the same type of computing units, thereby improving the efficiency of data processing.

For ease of understanding, referring to FIG. 4, for example, at least two types of computing units include two first type of computing units and one second type of computing unit, the instruction receiving ends of two first type of computing units are connected to each other, and connected to the main control unit, so that the main control unit can control the two first type of computing units at the same time to synchronously perform the corresponding multiplication operation through one instruction. In this way, the main control unit only needs to send the operation instruction once, and can control the plurality of the same type of the computing units to synchronously perform the same computing operation, so that when synchronously processing the multiple groups of data through the plurality of the same type of computing units, the operation instruction does not need to be issued for multiple times, thereby reducing the number of times of issuing the instructions, and improving the data processing efficiency.

It can be understood that the foregoing examples are for ease of understanding only, and are not intended to limit the present disclosure.

In the third embodiment, the number of computing units of at least some types in the at least two types of computing units is multiple, wherein the instruction receiving ends of the plurality of the specified same type of computing units are connected to each other, and connected to the main control unit. Other types of computing units are separately connected to the main control unit.

The specified type may be one type or a plurality of types, and the specific specified type is not limited herein.

For ease of understanding, referring to FIG. 5, for example, at least two types of computing units include two first type of computing units, and three second type of computing units, the instruction receiving ends of the two first type of computing units are connected to each other, and connected to the main control unit, so that the main control unit can control the two first type of computing units at the same time to synchronously perform the corresponding multiplication operation through one instruction. The three second type of computing units are separately connected to the main control unit.

It can be understood that the foregoing examples are for ease of understanding only, and are not intended to limit the present disclosure.

In the fourth embodiment, the computing units are divided into the plurality of computing unit groups, wherein each computing unit group includes at least two types of computing units. Each group of computing units is connected to the main control unit in the same way of the second embodiment described foregoing.

The instruction receiving ends of the same type of computing units in different computing unit groups are not connected to each other.

Optionally, the type and the number of computing units included in each group of computing units may be the same or different.

For ease of understanding, referring to FIG. 6, it is illustrated by taking the following case as an example: three computing unit groups are provided in total, and each of the computing unit groups includes two first type of computing unit and one second type of computing unit.

For each of the computing unit groups (the part framed in FIG. 6 with dotted line), the instruction receiving ends of two first type of computing units are connected to each other, and connected to the main control unit, and the instruction receiving ends of the first type of computing units in different computing unit groups are not connected to each other. One second type of computing unit is connected to the main control unit.

It can be understood that the foregoing examples are for ease of understanding only, and are not intended to limit the present disclosure.

In one embodiment, the stream processor further includes at least one data storage area, the number of at least some types of computing units in the at least two types of computing units is multiple, the instruction receiving ends of the plurality of the same type of the computing units are connected to each other, and the plurality of the same type of the computing units are connected to different data storage areas, respectively. Since the same type of computing units are separately connected to the different data storage areas, the same type of computing units will not obtain the same group of data repeatedly, thereby reducing the condition that the same group of data is processed repeatedly for multiple times.

The data storage areas may be different areas divided in the same memory, or each data storage area may also be one memory. The memory herein can be mobile hard disk, read-only memory (ROM), random access memory (RAM), diskette, compact disc, and other media that can store data.

Optionally, the results computed by each computing unit are stored in the data storage area connected to the computing unit itself.

For ease of understanding, referring to FIG. 7, for example, at least two types of computing units include the first type of computing unit A, the first type of computing unit B, the second type of computing unit A, the data storage area A, and the data storage area B, the respective instruction receiving ends of the first type of computing unit A and the first type of computing unit B are connected to each other, and connected to the main control unit, and the first type of computing unit A is connected to the data storage area A, and the first type of computing unit B is connected to the data storage area B.

The second type of computing unit A may be connected to any one of the data storage area A and the data storage area B. The examples given herein are for ease of understanding only and should not be taken as a limitation of the present disclosure.

Optionally, the data storage area described foregoing may include a scalar storage area and a vector storage area, wherein the specific implementation of the computing unit connected to the data storage area is that the computing unit is separately connected to the scalar storage area and the vector storage area included in the data storage area.

The scalar storage area and the vector storage area may be different areas of the same memory, or, the scalar storage area and the vector storage area may be separate memories from each other. The specific implementation and principles of the memory herein are consistent with the memory foregoing, and are not repeated herein for brief description.

Optionally, the number of different types of computing units may be different. In this case, some data storage areas may be connected to each type of the computing units, and the remaining data storage areas may be only connected to partial types of computing units.

For example, referring to FIG. 8, when at least two types of computing units include the first type of computing unit and the second type of computing unit, the stream processor may include n first type of computing units and m second type of computing units, wherein n, and m are positive integers, and $n > m$. Accordingly, the stream processor further includes n data storage areas.

In this case, each of the data storage areas is connected to one of the first type of computing units respectively, and m data storage areas are further connected to one of the second type of computing units, respectively. Moreover, the instruction receiving ends of n first type of computing units are connected to each other, and the instruction receiving ends of m second type of computing units are connected to each other. The examples given herein are for ease of understanding only and should not be taken as the limitation of the present disclosure.

Optionally, the number of different types of computing units may be the same.

Since the number of different types of computing units is the same, each data storage area is connected to each type of computing units, so that all computing units connected to each data storage area can process the same computing tasks, and thus the multiple groups of data can be processed synchronously through all computing units connected to each data storage area. The processing logic performed by computing unit corresponding to each data memory is the same, and thus the processing efficiency for the multiple groups of data which need to perform the same computing logic can be improved.

For example, referring to FIG. 9, when the at least two types of computing units include the first type of computing unit and the second type of computing unit, the stream processor may include n first type of computing units and n second type of computing units, wherein n is a positive integer. Accordingly, the stream processor further includes n data storage areas.

In this case, each data storage area is connected to one of the first type of computing units and one of the second type of computing units, respectively. The instruction receiving ends of n first type of computing units are connected to each other, and the instruction receiving ends of n second type of computing units are connected to each other. The examples given herein are for ease of understanding only and should not be taken as the limitation of the present disclosure.

Optionally, in the case that the at least two types of computing units include the first type of computing unit, the second type of computing unit, the third type of computing unit and the fourth type of computing unit, each data storage area is separately connected to one of the first type of computing units, one of the second type of computing units, one of the third type of computing units and one of the fourth type of computing units.

Since most of the processing logic of the computing tasks can be realized by multiplication operation, addition operation, lookup table operation and transportation operation, one computing task can be processed through four types of computing units connected to the same data storage area. The multiple groups of data to be processed of the same computing task can be processed at the same time, through four types of computing units which are separately connected to the plurality of data storage areas, which can improve the efficiency of data processing.

Optionally, in the third embodiment, the stream processor may further include the statistic operation unit. The statistic operation unit is connected to the main control unit, and connected to each of the data storage areas.

The statistic operation unit is configured to perform the process of seeking the maximum value or the summation process on target data in the data storage area, in response to the operation instruction assigned by the main control unit.

Since the statistic operation unit is connected to each of the data storage areas, the statistic operation unit can obtain the target data from each of the data storage areas, and thus can perform the process of seeking the maximum value or the summation process on the target data. The efficiency of data processing is improved without using the second type of computing units for performing the addition operation to compute the maximum value through multiple times of summation.

The target data may be target data pre-stored in the data storage area, and the statistic operation unit directly obtains the corresponding target data from each of the data storage areas, and then performs the process of seeking the maximum value or a cumulative summation process based on all the obtained target data.

Alternatively, the target data may be a computing result obtained after the computing module performs the corresponding computing operation and stored in the data storage area. The statistic operation unit obtains the corresponding computing results from each of the data storage areas, and then performs the process of seeking the maximum value or the cumulative summation process based on all of the obtained computing results.

The process results obtained from the statistic operation unit for performing the process of seeking the maximum value or the cumulative summation process may also be stored in each of the data storage areas, or the process results obtained may be directly output to a third-party device.

The statistic operation unit may be any circuit that can perform the process of seeking the maximum value or the cumulative summation process, and the specific circuit structure of the statistic operation unit is not limited herein.

In the embodiment, the stream processor further includes the table storage unit, and the table storage unit is configured to store the functional relation table.

The table storage unit is connected to each of the third type of computing units, and the third type of computing unit is configured to perform the lookup table operation on the functional relation table in the table storage unit, in response to the operation instruction assigned by the main control unit.

Optionally, the functional relation table foregoing may be coordinate values of the plurality of points of the independent variables of any complex functions in a certain range (each coordinate value includes an independent variable and the dependent variable corresponding to the independent variable). When the third type of computing unit performs the lookup table operation, the third type of computing unit will obtain a target independent variable or a target dependent variable, and then looks up the dependent variable corresponding to the target independent variable or the independent variable corresponding to the target dependent variable from the functional relation table.

Optionally, the table storage unit contains a software configurable table, and a functional relation table pre-cured in the table storage unit.

By disposing the software configurable table, according to the actual demand, it is possible to load the corresponding functional relation table into the software configurable table, so that the lookup table operation can be realized by the configured software configurable table.

Since some functions will are commonly used in the plurality of computing tasks, in order to improve computing efficiency, the functional relation table corresponding to such functions can be pre-cured in the table storage unit. By disposing the functional relation table pre-cured in the table storage unit, the time for loading the functional relation table can be saved, and since the functional relation table pre-cured in the table storage unit does not change, it only occupies a small amount of memory.

For example, tanh and sigmoid are common activation functions in the **AI** network, in order to save the time of loading the table when looking up the table of tanh/sigmoid, it is possible to store a fixed sigmoid functional relation table and a fixed tanh functional relation table in the table storage unit.

When the target independent variable or the target dependent variable exists in the functional relation table, the dependent variable corresponding to the target independent variable or the independent variable corresponding to the target dependent variable can be obtained directly.

When the target independent variable does not exist in the functional relation table, the third type of computing unit obtains the two independent variables which are most close to the target independent variable from the functional relation table, and then the average value of the dependent variables corresponding to the two independent variables is taken as the dependent variable corresponding to the target independent variable.

Similarly, when the target dependent variable does not exist in the functional relation table, the third type of computing unit obtains the two dependent variables which are most close to the target dependent variable from the functional relation table, and then the average value of the independent variables corresponding to the two dependent variables is taken as the independent variable corresponding to the target dependent variable.

Optionally, only one functional relation table may be stored in the table storage unit, or the plurality of different functional relation tables may be stored in the table storage unit.

The table storage unit may be any device with the storage capacity, for example, the table storage unit may be any kind of storage medium, and the specific structure of the table storage unit is not limited herein.

Optionally, multiple table storage unit may be included, each of the third type of computing units is separately connected to one table storage unit.

The functional relation tables stored in the different table storage unit may be different or the same, or the functional relation tables stored in parts of the table storage units may be the same.

Optionally, in case that the instruction receiving ends of the plurality of the third type of computing units are connected to each other, and connected to the main control unit, the functional relation tables stored in the table storage units which is separately connected to the plurality of the third type of computing units are the same.

In one embodiment, the stream processor may further include the instruction storage unit, the instruction storage unit is connected to the main control unit, and the instruction storage unit is configured to store the operation instruction. The main control unit is further configured to obtain the operation instruction from the instruction storage unit. By disposing the instruction storage unit to store the operation instruction, so that the present solution can be operated independently without obtaining the operation instruction from outside, thereby improving application range of the present solution.

Each of the operation instructions stored in the instruction storage unit may be an operation instruction for only one type of computing unit. In this case, the main control unit directly sends the operation instruction to the corresponding computing unit when obtained the operation instruction.

Alternatively, each operation instruction stored in the instruction storage unit may be a set of operation instructions for the plurality type of computing units. In this case, after the main control unit obtains the operation instruction, the main control unit will split the operation instruction according to the type of the computing units, and obtain the plurality of sub-operation instructions, and then sends each of the sub-operation instructions to the corresponding computing unit, so as to realize synchronous control of the plurality of types of computing units to compute.

In one embodiment, the stream processor described foregoing may be disposed with two operating mode, that is, instruction mode and sharing mode.

In case that the stream processor is in the instruction mode, the main control unit computing unit controls the computing unit to perform the corresponding computing operation through the operation instruction stored in the instruction storage unit.

In case that the stream processor is in the sharing mode, the stream processor shares its own computing unit to other processors, thereby enabling the other processors to control the computing unit in the stream processor to perform the computing operation.

For easy understanding of the stream processor foregoing, referring to FIG. 10, FIG. 10 shows a block diagram of the structure of the stream processor illustrated in the embodiments of the present disclosure, and it should be noted that the stream processor illustrated in FIG. 10 is only one embodiment of the stream processor illustrated in the plurality of the embodiments of the present disclosure, and should not be taken as the limitation of the present disclosure.

The stream processor includes the main control unit, the statistic operation unit, the table storage unit, the instruction storage unit, n first type of computing units, n second type of computing units, n third type of computing units, n fourth type of computing units and n data storage areas, wherein n is the positive integer.

The main control unit is separately connected to each of the computing units, statistic operation unit and the instruction storage unit, and the instruction receiving ends of the same type of computing units are connected to each other, and the same type of computing units are separately connected to different data storage areas.

The n third type of computing units are all connected to the table storage unit, and the statistic operation unit is connected to each of the data storage areas.

The specific implementation and principle of the main control unit, the statistic operation unit, the table storage unit, the instruction storage unit, the first type of computing unit, the second type of computing unit, the third type of computing unit, the fourth type of computing unit and the data storage area have already been described clearly foregoing, and will not be repeated herein for brief description.

For easy understanding of the specific workflow of the stream processor foregoing, the following is an example of the stream processor performing the softmax computing tasks.

First, the main control unit controls the statistic operation unit to compute the maximum value in the received data, and stores the computed target maximum value (denoted as max below) in each of data storage areas.

Then, for each of the second type of computing units, the main control unit controls the second type of computing units to compute xi-max and stores the computing result (denoted as A1 below) in the data storage area to which the second type of computing unit is connected, wherein xi is the input data or the data pre-stored in the data storage area which is connected to the second type of computing unit.

The main control unit controls the third type of computing units (connected to the same data storage area) corresponding to the second type of computing units to perform the lookup table operation, so as to look up the lookup table result corresponding to A1 (denoted as B1 below), wherein the table storage unit stores the functional relation table of exp (xi-max).

The main control unit controls the statistic operation unit to perform the cumulative summation on B1 in each data storage area, i.e., to compute the sum (exp (xi-max)), and stores the obtained result (denoted as C1 below) in each data storage area.

The main control unit controls the third type of computing units to perform the lookup table operation, so as to look up the lookup table result corresponding to C1 (denoted as D1 below), wherein the table storage unit stores the functional relation table of 1/ sum (exp (xi-max)).

The main control unit controls the first type of computing units to compute the exp (xi-max) * (1/ sum (exp (xi-max))), i.e., B1*D1, and obtains the output result, so as to finish the compute for the softmax.

For easy understanding of the specific workflow of the stream processor foregoing, the following is an example of the stream processor performing the computing task of Instance Normalization.

First, the main control unit controls the first type of computing unit to compute xij2, wherein xij is the input data and xij represents the element of row i and column j of the input data matrix, and both i and j are the positive integers.

Then, the main control unit controls the statistic operation unit to respectively acquire xij2 and xij from each of the data storage areas, and then compute the sum (xij) based on all the obtained xij and compute the sum (xij2) based on all the obtained xij2, and stores the computing results in the data storage areas.

The main control unit controls the average value μi of xij computed by the first type of computing units, and stores the average value μi in the data storage area, where μi = sum (xij) ÷ the number of elements, wherein the number of elements is the number of xij obtained when computing the sum (xij).

After that the main control unit controls the first type of computing units to compute the μi2, i.e., to compute (sum (xij) ÷ the number of elements)2; and stores the computing result in the data storage area.

The main control unit controls the second type of computing units to compute sum (xij2) + μi2, and stores the computing results in the data storage area.

The main control unit controls the third type of computing units to compute $\frac{1}{\sqrt{(\sigma_i^2+\varepsilon)}}$, wherein the table storage unit stores the functional relation table of $\frac{1}{\sqrt{(\sigma_i^2+\varepsilon)}}$, and stores the computing results in the data storage area, wherein σi2 means the variance, $\varepsilon$ means Epsilon, which is a very small positive floating-point number (0.000001) used to prevent the denominator of the formula from being 0.

The main control unit controls the second type of computing units to compute xij-μi and stores the computing results in the data storage area.

Finally, the main control unit controls the first type of computing units to compute the final result of instance normalization. That is, the main control unit controls the first type of computing units to acquire xij-μi and $\frac{1}{\sqrt{(\sigma_i^2+\varepsilon)}}$ from the data storage area, and then compute the product of xij-μi and $\frac{1}{\sqrt{(\sigma_i^2+\varepsilon)}}$, so as to obtain the final result.

The foregoing examples are only for easy understanding and should not be taken as the limitation of the present disclosure.

Based on the same technical idea, the present disclosure further provides a computing method, which is applied to the stream processor foregoing, which will be described below in connection with FIG. 11.

S100: an operation instruction is assigned to the computing unit through the main control unit.

S200: The corresponding computing operation of the computing unit is performed by the computing unit in response to the operation instruction.

By repeating the foregoing computing method in accordance with the computing logic corresponding to the computing task, different kinds of computing units can be combined with each other to compute the different computing tasks, wherein the computing logic corresponding to the computing task is reflected on issuing order of the instructions, while the issuing order of the instructions may be, but are not limited to, pre-configured by engineers.

The computing method provided in the embodiments of the present disclosure has the same realization principle and technical effect as the stream processor in embodiments foregoing, and for brief description, regarding the contents not mentioned in the part of the method embodiments, reference can be made to the corresponding contents in embodiments of the stream processor foregoing.

Based on the same technical idea, the present disclosure further provides a chip, which includes the stream processor foregoing.

The chip may be a chip with data processing capabilities such as a SOC (System on Chip) chip, AI (Artificial Intelligence) chip, CPU (Central Processing Unit), GPU (graphics processing unit), GPGPU (General-purpose computing on graphics processing units), etc.

The specific implementation and the principle of the stream processor have been described clearly foregoing, and for brief description, will not be repeated herein.

In an optional implementation of the embodiment of the present disclosure, one stream processor may be packaged in one chip to perform different computing tasks.

In another optional embodiment of the embodiment of the present disclosure, the plurality of stream processors may be packaged in one chip at the same time.

At this point, in one of the feasible embodiments, the stream processors may be independent of each other, and finish different computing tasks independently.

In addition, in another feasible embodiment, a computing task may be split into the plurality of relatively independent small computing tasks by the engineer or an upper-layer software, and then the upper-layer distributor in the chip distributes the different small computing tasks to different stream processors to perform, or the engineer writes the relevant instructions in accordance with the small computing tasks in the main control modules within respective stream processors, so as to realize the coordinated work among the various stream processors, and to improve the processing efficiency.

Based on the same technical idea, the present disclosure further provides an electronic device, which includes the chip described foregoing.

The electronic device may be a complete device such as a computer, cell phone, and server, or the electronic devices that can be sold independently and disposed in others device, such as a CPU board, a graphics card, a controller.

The specific implementation and the principle of the chip has been described clearly foregoing, and for brief description, will not be repeated herein.

The technical features in the foregoing embodiments can be freely combined to form new embodiments without conflict.

The plurality in the embodiments of the present disclosure refers to two or more.

Connections in embodiments of the present disclosure include direct or indirect electrical connections.

The foregoing is only optional embodiments of the present disclosure, and is not intended to limit the present disclosure, and the present disclosure may have various changes and variations for those skilled in the art. Any modifications, equivalent substitutions, improvements, etc. made within the spirit and principles of the present disclosure shall be included in the scope of protection of the present disclosure.

## Claims

1. A stream processor, **characterized by** comprising:

   at least two types of computing units, each type of the computing units configured to perform one computing operation of a multiplication operation, an addition operation, a lookup table operation and a data transportation; and

   a main control unit, wherein the main control unit is connected to each of the computing units, and configured to assign an operation instruction to the computing units, so as to make the computing units perform computing operations corresponding to the computing units in response to the operation instruction.

2. The stream processor according to claim 1, wherein the number of the computing units of at least some types of the at least two types of the computing units is multiple; and
   instruction receiving ends of a plurality of the same type of the computing units are connected to each other, and connected to the main control unit.

3. The stream processor according to claim 2, wherein the stream processor further comprises at least one data storage area; and
   the plurality of the same type of the computing units are separately connected to different data storage areas.

4. The stream processor according to claim 3, wherein the stream processor further comprises:
   a statistic operation unit, wherein the statistic operation unit is connected to the main control unit, and connected to each of the at least one data storage area; and the statistic operation unit is configured to perform a process of seeking a maximum value or a summation process on target data in the at least one data storage area, in response to the operation instruction assigned by the main control unit.

5. The stream processor according to claim 3, wherein the number of different types of the computing units is the same.

6. The stream processor according to claim 5, wherein the at least two types of the computing units comprise a first type of computing unit, a second type of computing unit, a third type of computing unit and a fourth type of computing unit, wherein the first type of computing unit is a computing unit that performs the multiplication operation, the second type of computing unit is a computing unit that performs the addition operation, the third type of computing unit is a computing unit that performs the lookup table operation, and the fourth type of computing unit is a computing unit that performs a transportation operation.

**7.** The stream processor according to claim 1, wherein the stream processor further comprises:

a table storage unit, configured to store a functional relation table, wherein
the table storage unit is connected to each third type of computing unit, and the third type of computing unit is configured to perform the lookup table operation on the functional relation table in the table storage unit, in response to the operation instruction assigned by the main control unit.

**8.** The stream processor according to claim 1, wherein the stream processor further comprises:
an instruction storage unit, wherein the instruction storage unit is connected to the main control unit, and the instruction storage unit is configured to store the operation instruction; and the main control unit is further configured to acquire the operation instruction from the instruction storage unit.

**9.** A computing method, applicable to the stream processor according to any one of claims 1-8, **characterized in that** the computing method comprises:

assigning the operation instruction to the computing units through the main control unit; and
performing the computing operations corresponding to the computing units through the computing units in response to the operation instruction.

**10.** A chip, **characterized by** comprising:
the stream processor according to any one of claims 1-8.

**11.** An electronic device, **characterized by** comprising:
the chip according to claim 10.

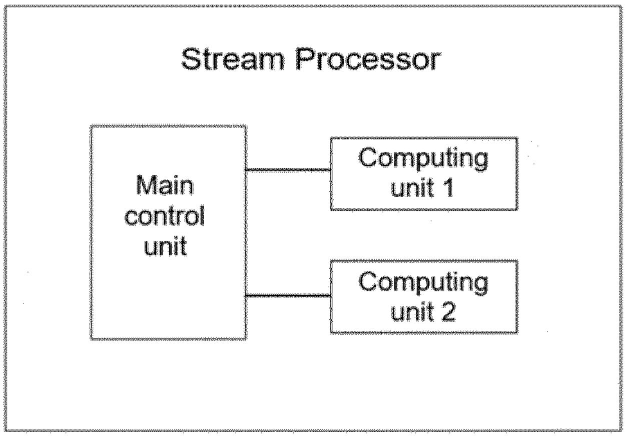


FIG. 1

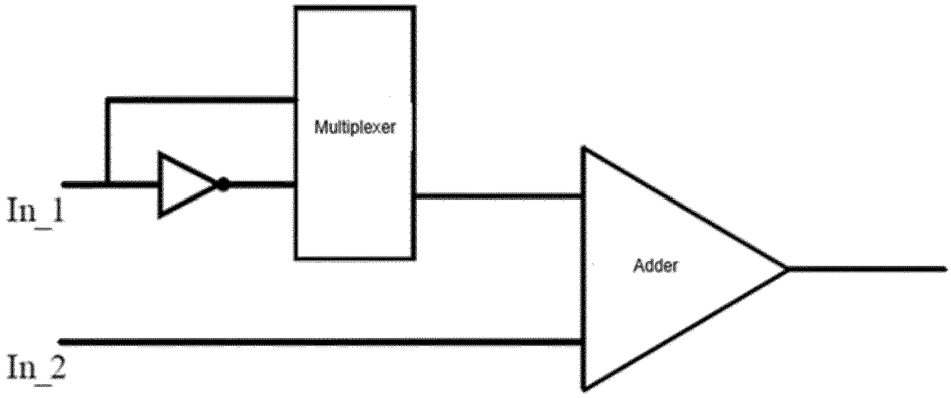


FIG. 2

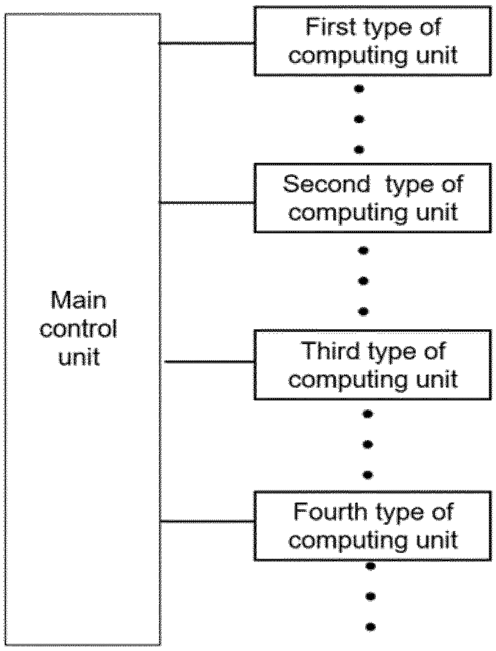


FIG. 3

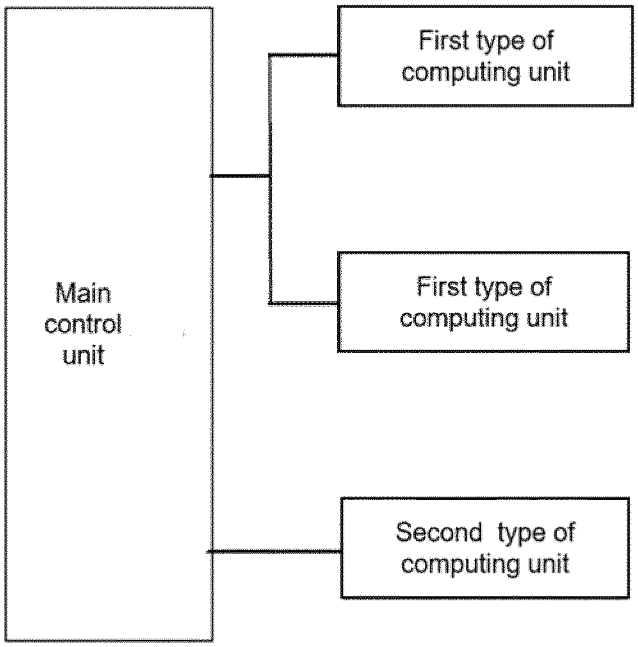
Main
control
unit
First type of
computing unit
First type of
computing unit
Second type of
computing unit

FIG. 4

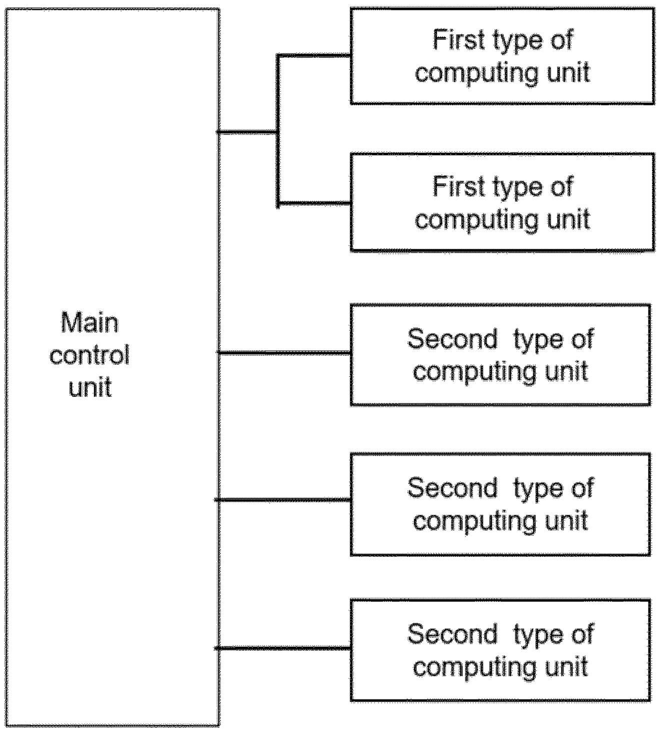
Main
control
unit
First type of
computing unit
First type of
computing unit
Second type of
computing unit
Second type of
computing unit
Second type of
computing unit

FIG. 5

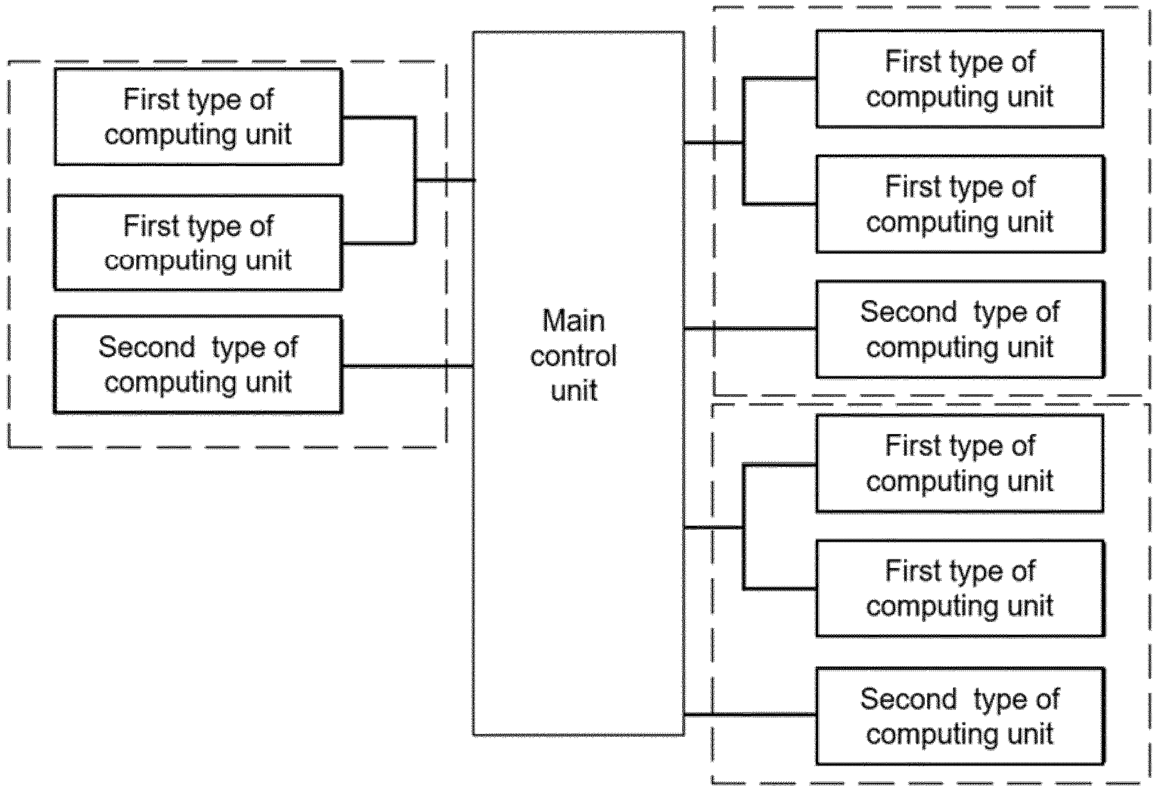
First type of computing unit
First type of computing unit
Second type of computing unit
Main control unit
First type of computing unit
First type of computing unit
Second type of computing unit
First type of computing unit
First type of computing unit
Second type of computing unit

FIG. 6

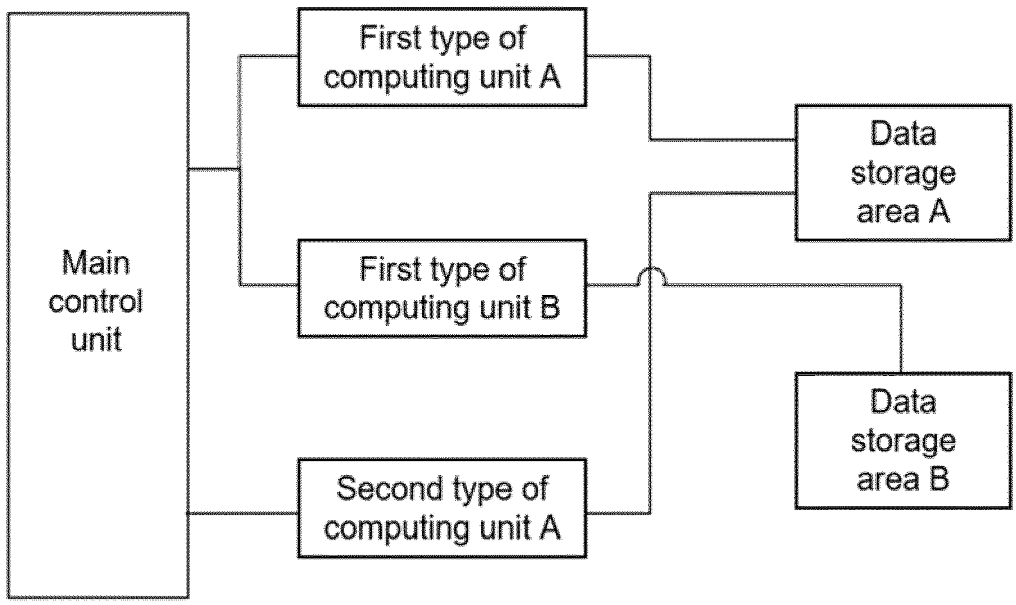
Main control unit
First type of computing unit A
First type of computing unit B
Second type of computing unit A
Data storage area A
Data storage area B

FIG. 7

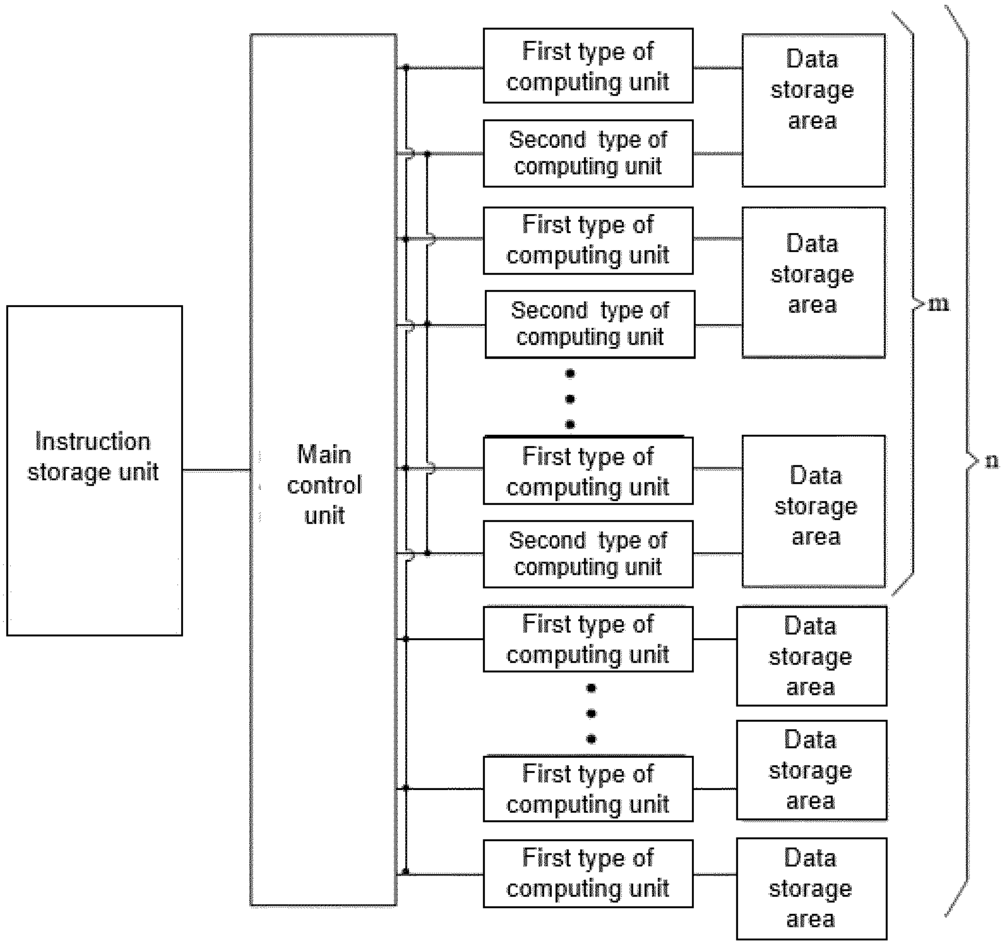
Instruction storage unit
Main control unit
First type of computing unit
Second type of computing unit
First type of computing unit
Second type of computing unit
First type of computing unit
Second type of computing unit
First type of computing unit
First type of computing unit
First type of computing unit
Data storage area
Data storage area
Data storage area
Data storage area
Data storage area
Data storage area
m
n

FIG. 8

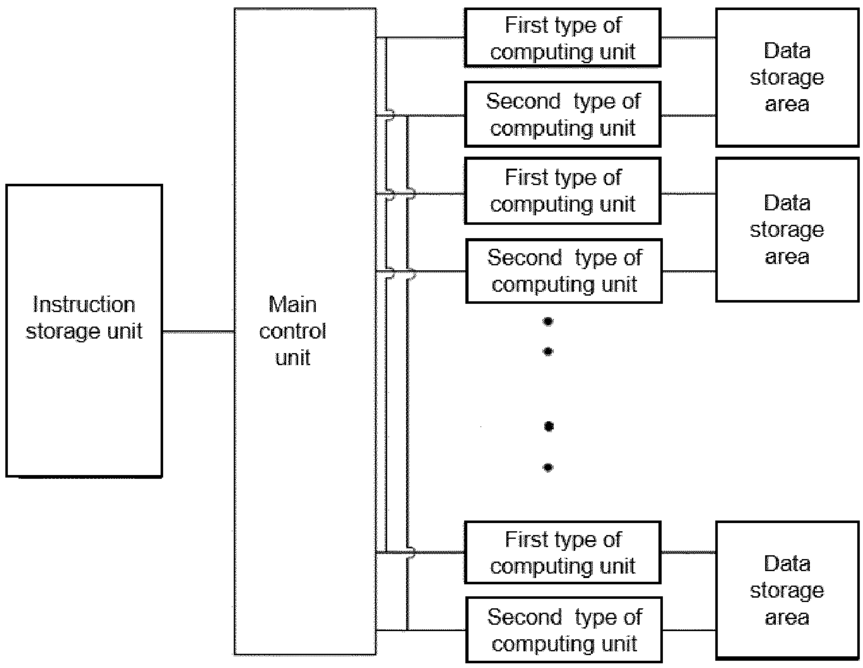
Instruction storage unit
Main control unit
First type of computing unit
Second type of computing unit
First type of computing unit
Second type of computing unit
First type of computing unit
Second type of computing unit
Data storage area
Data storage area
Data storage area

FIG. 9

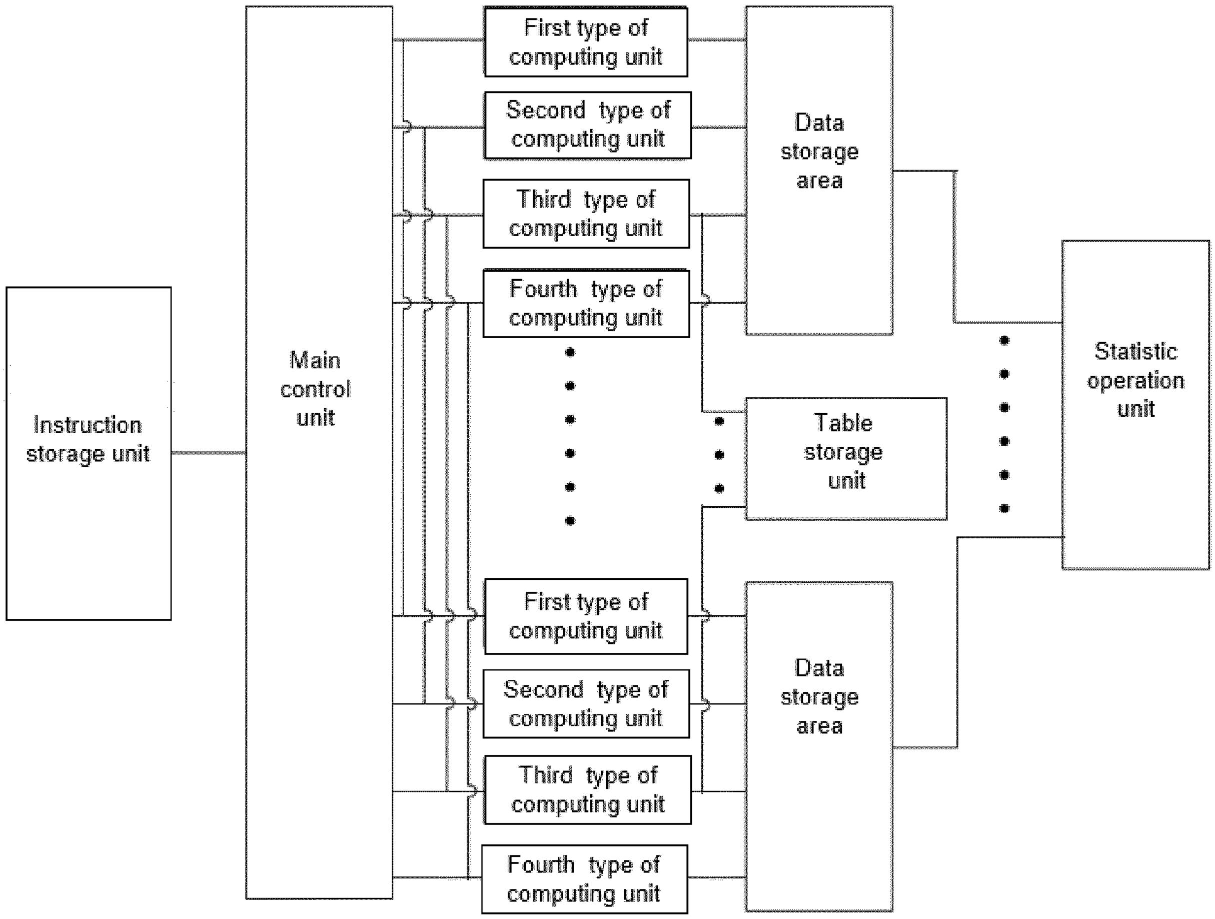
Instruction storage unit
Main control unit
First type of computing unit
Second type of computing unit
Third type of computing unit
Fourth type of computing unit
First type of computing unit
Second type of computing unit
Third type of computing unit
Fourth type of computing unit
Data storage area
Table storage unit
Data storage area
Statistic operation unit

FIG. 10

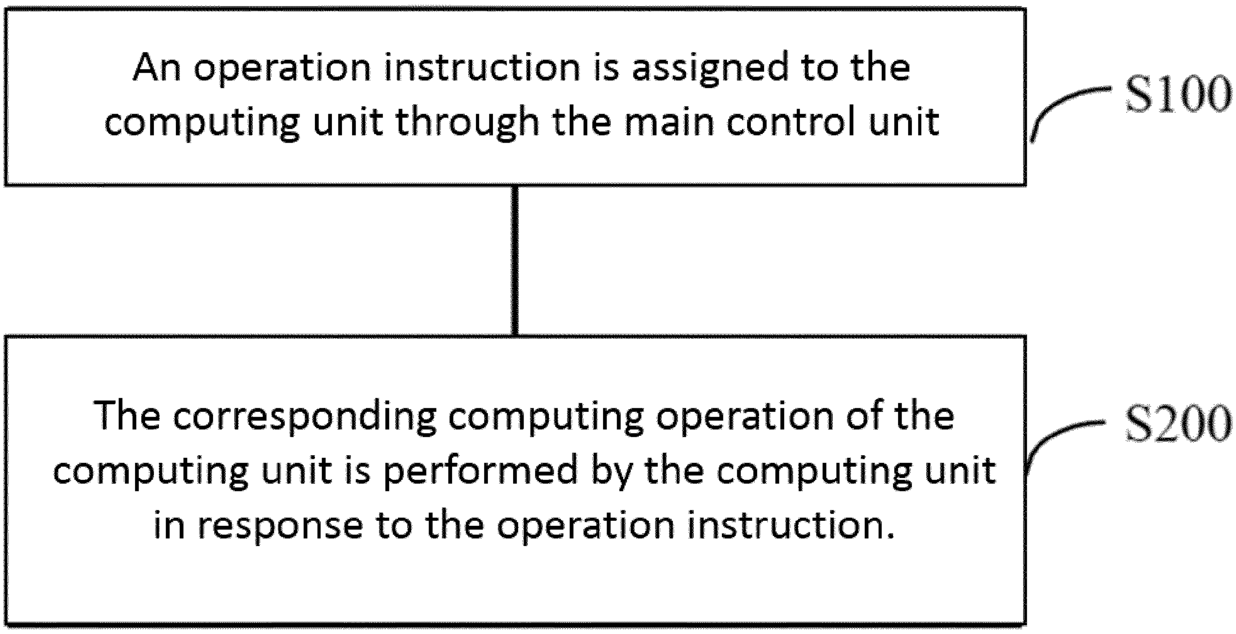
An operation instruction is assigned to the computing unit through the main control unit
S100
The corresponding computing operation of the computing unit is performed by the computing unit in response to the operation instruction.
S200

FIG. 11

## INTERNATIONAL SEARCH REPORT

International application No.
**PCT/CN2023/112685**

### A. CLASSIFICATION OF SUBJECT MATTER

G06N 3/063(2023.01)i

According to International Patent Classification (IPC) or to both national classification and IPC

### B. FIELDS SEARCHED

Minimum documentation searched (classification system followed by classification symbols)

IPC：G06N

Documentation searched other than minimum documentation to the extent that such documents are included in the fields searched

Electronic data base consulted during the international search (name of data base and, where practicable, search terms used)

CNTXT; CNABS; VEN; USTXT; EPTXT; WOTXT; CNKI; IEEE: 流处理器, 处理器, 乘法, 加法, 查表, 搬运, 计算, 运算, 单元, 模块, 并行, 指令, stream processor, processor, multiplication, addition, checklist, move, compute, calculation, unit, module, parallel, instruction

### C. DOCUMENTS CONSIDERED TO BE RELEVANT

| Category* | Citation of document, with indication, where appropriate, of the relevant passages | Relevant to claim No. |
|---|---|---|
| X | CN 116402102 A (BEIJING ESWIN COMPUTING TECH CO., LTD.) 07 July 2023 (2023-07-07)<br>description, paragraphs 44-98 | 1-11 |
| X | CN 109389210 A (SHANGHAI CAMBRICON INFORMATION TECHNOLOGY CO., LTD.) 26 February 2019 (2019-02-26)<br>description, paragraphs 93-204 | 1-11 |
| A | US 2023133094 A1 (ELECTRONICS AND TELECOMMUNICATIONS RESEARCH INSTITUTE) 04 May 2023 (2023-05-04)<br>entire document | 1-11 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 April 2024** | **16 April 2024** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2023/112685**

| Patent document cited in search report | Publication date (day/month/year) | Patent family member(s) | Publication date (day/month/year) |
|---|---|---|---|
| CN 116402102 A | 07 July 2023 | None | |
| CN 109389210 A | 26 February 2019 | CN 109389210 B | 18 June 2021 |
| | | WO 2018214913 A1 | 29 November 2018 |
| | | CN 108960415 A | 07 December 2018 |
| | | CN 108960420 A | 07 December 2018 |
| | | CN 109146069 A | 04 January 2019 |
| | | CN 109389208 A | 26 February 2019 |
| | | CN 109389209 A | 26 February 2019 |
| | | CN 109389218 A | 26 February 2019 |
| | | CN 109478251 A | 15 March 2019 |
| | | CN 110175673 A | 27 August 2019 |
| | | US 2020097806 A1 | 26 March 2020 |
| | | US 2020097826 A1 | 26 March 2020 |
| | | US 2020097827 A1 | 26 March 2020 |
| US 2023133094 A1 | 04 May 2023 | KR 20230064544 A | 10 May 2023 |

Form PCT/ISA/210 (patent family annex) (July 2022)